# EUROPEAN PATENT APPLICATION

(11) **EP 4 737 298 A1**
(43) Date of publication of application: **06.05.2026**
(21) Application number: 24832157.2
(22) Date of filing: 01.07.2024
(51) Int. Cl.: B63B 21/34, B63B 21/26, F03D 13/25

(54) **ANCHOR DEVICE, ANCHOR SYSTEM, AND METHOD FOR INSTALLING ANCHOR SYSTEM**

(30) Priority: 30.06.2023 JP 2023108672
(71) Applicant: National University Corporation Tokyo University of Marine Science and Technology, Minato-ku Tokyo 108-8477 (JP)
(72) Inventor: NOMURA, Shun, Tokyo 108-8477 (JP); TANI, Kazuo, Tokyo 108-8477 (JP); SATO, Arata, Tokyo 108-8477 (JP)
(74) Representative: Ex Materia
(86) International application number: PCT/JP2024/023821
(87) International publication number: WO 2025/005302

(57) **Abstract**

An anchor device (20) includes: a shaft member (22) extending along a central axis (A) and receiving attachment of a tension member (85); and a first plate member (30) and a second plate member (40) configured to be rotatable relative to each other about the central axis (A), in which the first plate member (30) includes a first back end portion (31) farthest from the central axis (A) in a direction in which the first plate member (30) extends and a direction orthogonal to the central axis (A), the second plate member (40) includes a second back end portion (41) farthest from the central axis (A) in a direction in which the second plate member (40) extends and a direction orthogonal to the central axis (A), and the anchor device (20) is configured to be able to change from a folded state in which the first back end portion (31) and the second back end portion (41) are close to each other to an unfolded state in which the first back end portion (31) and the second back end portion (41) are far from each other.

## Description

### TECHNICAL FIELD

The present invention relates to an anchor device, an anchor system, and a method of installing the anchor system.

### BACKGROUND ART

Conventionally, a wind power generator is known that is used in a floating state on a sea. Such a wind power generator is also called a floating offshore wind power generator. The floating offshore wind power generator includes a floating structure and a mooring system. The floating structure includes blades that rotate by receiving wind, a nacelle housing a power generator, a tower that supports the nacelle, and a support for supporting the tower. The mooring system is a system for mooring the floating structure to the ground. The mooring system includes an anchor placed into the ground and a mooring line connecting the floating structure and the anchor. The mooring line is, for example, a wire rope, and connects the support of the floating structure and the anchor. JP S61-7493 U discloses an example of a mooring system.

As an anchor included in a mooring system, a pile anchor, a suction anchor, a drag anchor, a suction embedment anchor, or the like is known. Although the pile anchor and the suction anchor are relatively large and have an advantage of being able to exert high holding power, the pile anchor and the suction anchor have disadvantages that a large ship or a large construction machine is required at the time of installation, and that installation cost increases and an installation period becomes long. In addition, although the drag anchor and the suction embedment anchor have an advantage that a large ship or a large construction machine is not required at the time of installation, the drag anchor and the suction embedment anchor have a disadvantage that it is difficult to exert high holding power because the anchors are relatively small. Note that the holding power means a force that is generated when a tensile force acts on the anchor via a mooring line, and that resists when the anchor moves, slides, or is pulled out from the ground in which the anchor is installed.

### SUMMARY OF THE INVENTION

The present invention has been made in view of such points, and an object of the present invention is to provide an anchor device, an anchor system, and a method of installing the anchor system that enable size reduction at a time of installation and that enable exertion of high holding power after the installation.

An anchor device according to the present invention is [1] an anchor device including:
a shaft member extending along a central axis and configured to receive attachment of a tension member; and
a first plate member and a second plate member configured to be rotatable relative to each other about the central axis,
in which
the first plate member includes a first back end portion farthest from the central axis in a direction in which the first plate member extends and a direction orthogonal to the central axis,
the second plate member includes a second back end portion farthest from the central axis in a direction in which the second plate member extends and a direction orthogonal to the central axis, and
the anchor device is configured to be able to change from a folded state in which the first back end portion and the second back end portion are close to each other to an unfolded state in which the first back end portion and the second back end portion are far from each other.

An anchor device according to the present invention is [2] the anchor device according to [1], in which
the first plate member includes a first outer surface that is oriented away from the second plate member in the folded state,
the second plate member includes a second outer surface that is oriented away from the first plate member in the folded state,
the first outer surface includes a first inclined outer surface that approaches the second plate member as the first inclined outer surface approaches the shaft member in the folded state, and
the second outer surface includes a second inclined outer surface that approaches the first plate member as the second inclined outer surface approaches the shaft member in the folded state.

An anchor device according to the present invention is [3] the anchor device according to [1] or [2], in which
the first back end portion includes a first inclined end surface that approaches the second plate member as the first inclined end surface approaches the shaft member in the folded state, and
the second back end portion includes a second inclined end surface that approaches the first plate member as the second inclined end surface approaches the shaft member in the folded state.

An anchor device according to the present invention is [4] the anchor device according to any one of [1] to [3], further including:
a third plate member connected to the first plate member and configured to be rotatable relative to the first plate member; and
a fourth plate member connected to the second plate member and configured to be rotatable relative to the second plate member.

An anchor device according to the present invention is [5] the anchor device according to any one of [1] to [4], further including a restriction portion configured to restrict an angle between the first plate member and the second plate member to a predetermined angle or less, in the unfolded state.

An anchor device according to the present invention is [6] the anchor device according to [5], in which the restriction portion includes contact portions that come into contact with each other when the angle between the first plate member and the second plate member becomes the predetermined angle.

An anchor device according to the present invention is [7] the anchor device according to [5] or [6], in which the restriction portion includes a connection member that connects the first plate member and the second plate member to each other.

An anchor device according to the present invention is [8] an anchor device including:
a shaft member extending along a central axis and configured to receive attachment of a tension member;
a first frame member and a second frame member configured to be rotatable relative to each other about the central axis; and
a pressure receiving member caused to extend across the first frame member and the second frame member,
in which
the first frame member includes a first back end portion farthest from the central axis in a direction orthogonal to the central axis,
the second frame member includes a second back end portion farthest from the central axis in a direction orthogonal to the central axis, and
the anchor device is configured to be able to change from a folded state in which the first back end portion and the second back end portion are close to each other to an unfolded state in which the first back end portion and the second back end portion are far from each other.

An anchor device according to the present invention is [9] the anchor device according to [8], further including:
a third frame member connected to the first frame member and configured to be rotatable relative to the first frame member; and
a fourth frame member connected to the second frame member and configured to be rotatable relative to the second frame member.

An anchor device according to the present invention is [10] the anchor device according to [8] or [9], further including a restriction portion configured to restrict an angle between the first frame member and the second frame member to a predetermined angle or less, in the unfolded state.

An anchor device according to the present invention is [11] the anchor device according to [10], in which the restriction portion includes a connection member that connects the first frame member and the second frame member to each other.

An anchor system according to the present invention is [12] an anchor system including:
the anchor device according to any one of [1] to [11]; and
a tension member attached to the shaft member.

A method of installing an anchor system according to the present invention is [13] a method of installing an anchor system, including:
a step of placing the anchor device of the anchor system according to [12] into a ground layer in the folded state; and
a step of causing the anchor device to change from the folded state to the unfolded state by pulling the tension member.

According to the present invention, it is possible to provide an anchor device, an anchor system, and a method of installing the anchor system that enable size reduction at a time of installation and that enable exertion of high holding power after the installation.

### BRIEF DESCRIPTION OF DRAWINGS

[Fig. 1] Fig. 1 is a view for explaining a first embodiment of the present invention, and is a view illustrating an example of a wind power generator and anchor systems.
[Fig. 2] Fig. 2 is a side view illustrating an example of an anchor device of the anchor system, in a folded state.
[Fig. 3] Fig. 3 is a side view illustrating the anchor device of Fig. 2 in a state in the middle of being unfolded.
[Fig. 4] Fig. 4 is a side view illustrating the anchor device of Fig. 2 in an unfolded state.
[Fig. 5] Fig. 5 is a plan view illustrating the anchor device of Fig. 4 in an unfolded state.
[Fig. 6] Fig. 6 is a view illustrating an example of a method of installing the anchor system.
[Fig. 7] Fig. 7 is a view illustrating an example of the method of installing the anchor system.
[Fig. 8] Fig. 8 is a view illustrating an example of the method of installing the anchor system.
[Fig. 9] Fig. 9 is a view illustrating an example of the method of installing the anchor system.
[Fig. 10] Fig. 10 is a view illustrating an example of the method of installing the anchor system.
[Fig. 11] Fig. 11 is a side view illustrating a modification of the anchor device in a folded state.
[Fig. 12] Fig. 12 is a side view illustrating the anchor device of Fig. 11 in an unfolded state.
[Fig. 13] Fig. 13 is a side view illustrating another modification of the anchor device in a folded state.
[Fig. 14] Fig. 14 is a side view illustrating the anchor device of Fig. 13 in an unfolded state.
[Fig. 15] Fig. 15 is a side view illustrating still another modification of the anchor device in a folded state.
[Fig. 16] Fig. 16 is a side view illustrating the anchor device of Fig. 15 in a state in the middle of being unfolded.
[Fig. 17] Fig. 17 is a side view illustrating the anchor device of Fig. 15 in an unfolded state.
[Fig. 18] Fig. 18 is a side view illustrating yet another modification of the anchor device in an unfolded state.
[Fig. 19] Fig. 19 is a side view illustrating further modification of the anchor device in a folded state.
[Fig. 20] Fig. 20 is a side view illustrating the anchor device of Fig. 19 in a state in the middle of being unfolded.
[Fig. 21] Fig. 21 is a side view illustrating the anchor device of Fig. 19 in a state in the middle of being unfolded.
[Fig. 22] Fig. 22 is a side view illustrating the anchor device of Fig. 19 in an unfolded state.
[Fig. 23] Fig. 23 is a side view illustrating an anchor device used in an experiment performed by the present inventors in a folded state.
[Fig. 24] Fig. 24 is a side view illustrating the anchor device of Fig. 23 in a state in the middle of being unfolded.
[Fig. 25] Fig. 25 is a graph illustrating a relationship between a pullout amount and each of unfolded angles in the anchor device of Fig. 23.
[Fig. 26] Fig. 26 is a graph illustrating a relationship between a pullout amount S (mm) and an unfolded angle θ (degrees) of the anchor device 20, when an angle θ₂ of the anchor device 20 is changed.
[Fig. 27] Fig. 27 is a graph illustrating a relationship between the pullout amount S (mm) and the unfolded angle θ (degrees) of the anchor device 20, when the angle θ₂ of the anchor device 20 is fixed to 20 degrees and an angle θ₃ is changed.
[Fig. 28] Fig. 28 is a graph illustrating a relationship between the angle θ₃ of the anchor device 20 and the pullout amount S in a state where unfolding of the anchor device 20 converges, when the angle θ₂ is fixed to 20 degrees.
[Fig. 29] Fig. 29 is a plan view illustrating an example of attachment positions of tension members in an anchor device.
[Fig. 30] Fig. 30 is a side view illustrating the anchor device of Fig. 29 in a folded state.
[Fig. 31] Fig. 31 is a plan view illustrating another example of an attachment position of a tension member in an anchor device.
[Fig. 32] Fig. 32 is a plan view illustrating still another example of attachment positions of tension members in an anchor device.
[Fig. 33] Fig. 33 is a view for explaining a second embodiment of the present invention, and is a plan view illustrating an example of an anchor device in an unfolded state.
[Fig. 34] Fig. 34 is a cross-sectional view illustrating the anchor device of Fig. 33 in a folded state.
[Fig. 35] Fig. 35 is a cross-sectional view illustrating the anchor device of Fig. 33 in an unfolded state.
[Fig. 36] Fig. 36 is a plan view illustrating another example of the anchor device of the second embodiment in an unfolded state.
[Fig. 37] Fig. 37 is a cross-sectional view illustrating the anchor device of Fig. 36 in a folded state.
[Fig. 38] Fig. 38 is a cross-sectional view illustrating the anchor device of Fig. 36 in an unfolded state.
[Fig. 39] Fig. 39 is a plan view illustrating still another example of the anchor device of the second embodiment in an unfolded state.
[Fig. 40] Fig. 40 is a cross-sectional view illustrating the anchor device of Fig. 39 in a folded state.
[Fig. 41] Fig. 41 is a cross-sectional view illustrating the anchor device of Fig. 39 in an unfolded state.
[Fig. 42] Fig. 42 is a top view illustrating an example of an arrangement of wind power generators and anchor devices.

### BEST MODES FOR CARRYING OUT THE INVENTION

Hereinafter, embodiments of the present invention will be described with reference to the drawings. Note that, in the drawings attached herein, scales, vertical and horizontal dimensional ratios, and the like are appropriately changed and exaggerated from the actual ones for convenience of illustration and ease of understanding.

### First Embodiment

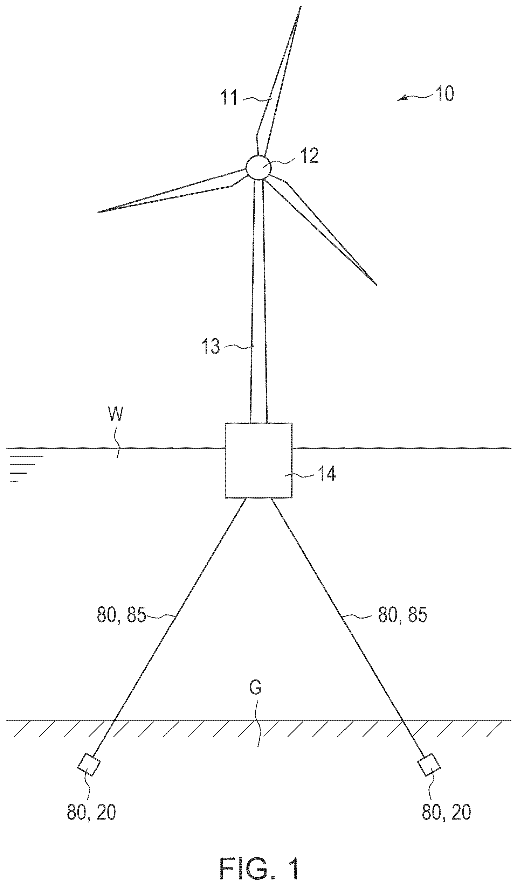

Fig. 1 is a view for explaining a first embodiment of the present invention, and is a view illustrating an example of a wind power generator 10 and anchor systems 80. The wind power generator 10 of the present embodiment is a so-called floating offshore wind power generator, and generates electric power in a state of floating on a water layer W. The water layer W is, for example, a layer of seawater or fresh water. That is, the wind power generator 10 of the present embodiment is placed to float on the sea surface, the lake surface, or the like.

The wind power generator 10 includes blades 11 that rotate by receiving wind, a nacelle 12 housing a power generator, a tower 13 that supports the nacelle 12, and a support 14 that supports the tower 13. The blades 11 are connected to the power generator housed in the nacelle 12 via a mechanism such as a gear. In the wind power generator 10, the blades 11 are rotated by the wind, whereby the power generator generates electric power. The generated electric power is sent to an electrical substation facility provided on land or the like via a cable (not illustrated).

The anchor system 80 of the present embodiment is used to hold the wind power generator 10 at a predetermined position. Note that the anchor system 80 may be used to hold another apparatus or a structure other than the wind power generator 10 at a predetermined position. That is, the anchor system 80 may be used to hold another apparatus or a structure placed to float on the water layer W or in the water layer W, at a predetermined position. In addition, the anchor system 80 may be used to hold the position and the posture of an apparatus or a structure placed on land or floated in the atmosphere. For example, the anchor system 80 may be used to hold the posture of a tower-like or column-like structure such as a steel tower for power transmission or a chimney placed on land.

The anchor system 80 includes an anchor device 20 and a tension member 85. The tension member 85 is used as a so-called mooring line through which a tensile force is caused to act on the anchor device 20 placed in a ground layer G. The tension member 85 is attached to a shaft member 22, which will be described later, of the anchor device 20. As the tension member 85, a wire rope, a bar, a plate-like member, or the like can be used without particular limitation. The tension member 85 may be a member that is flexible, or a rigid body.

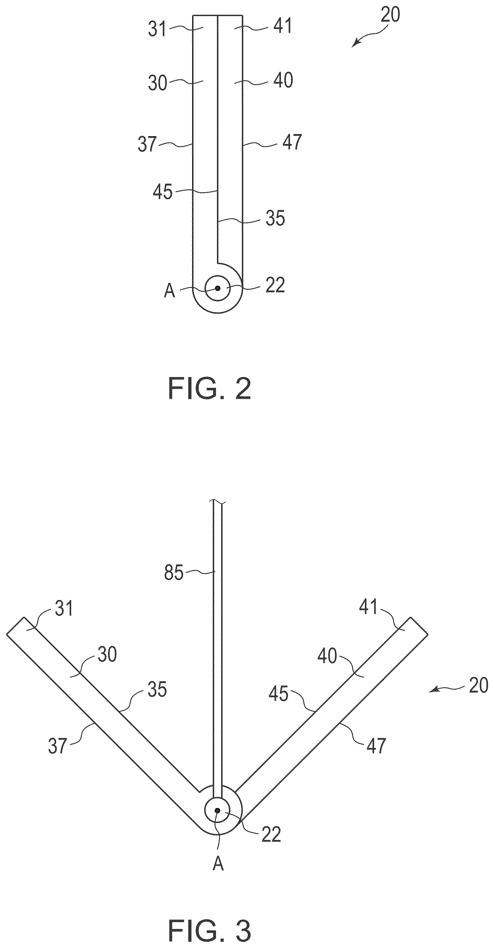

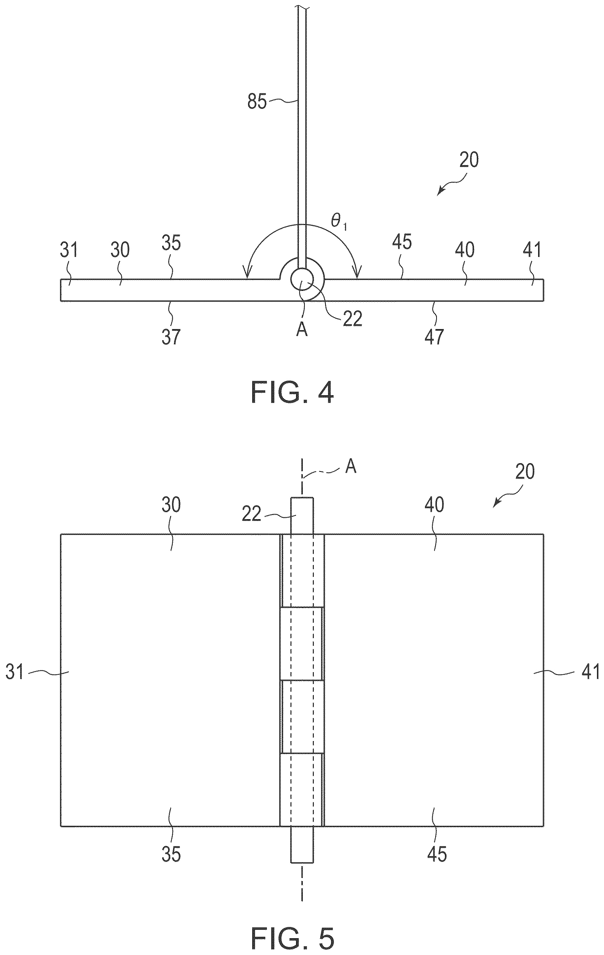

Fig. 2 is a side view illustrating an example of the anchor device 20 in a folded state. Fig. 3 is a side view illustrating the anchor device 20 in a state in the middle of being unfolded. Fig. 4 is a side view illustrating the anchor device 20 in an unfolded state. Fig. 5 is a plan view illustrating the anchor device 20. Note that in each of Figs. 2 and 5, illustration of the tension member 85 is omitted.

The anchor device 20 includes the shaft member 22, a first plate member 30, and a second plate member 40. Each of the first plate member 30 and the second plate member 40 has a substantially plate-like shape. The shaft member 22 has a circular columnar shape, and extends along the central axis A. The central axis A is a rotation axis for relative rotation of the first plate member 30 and the second plate member 40. The central axis A extends along a plate plane of the first plate member 30 and a plate plane of the second plate member 40. Note that the plate plane of the first plate member 30 refers to a plane that corresponds to a direction in which the first plate member 30 extends out, when the entire first plate member 30 is viewed. Similarly, the plate plane of the second plate member 40 refers to a plane that corresponds to a direction in which the second plate member 40 extends out, when the entire second plate member 40 is viewed. The first plate member 30 and the second plate member 40 are each attached to the shaft member 22. The first plate member 30 and the second plate member 40 are configured to be rotatable relative to each other about the central axis A. The first plate member 30 and the second plate member 40 of the present embodiment are configured like a hinge that performs mutual rotation about the central axis A.

The first plate member 30 includes a first back end portion 31. The first back end portion 31 is an end portion in the first plate member 30, far from the central axis A. More specifically, the first back end portion 31 is an end portion farthest from the central axis A, in a direction in which the first plate member 30 extends and a direction orthogonal to the central axis A. The second plate member 40 includes a second back end portion 41. The second back end portion 41 is an end portion in the second plate member 40, far from the central axis A. More specifically, the second back end portion 41 is an end portion farthest from the central axis A, in a direction in which the second plate member 40 extends and a direction orthogonal to the central axis A.

The anchor device 20 of the present embodiment is configured to be able to change from a folded state to an unfolded state. The folded state is a state in which the anchor device 20 is most closed. In other words, the folded state is a state in which the first back end portion 31 and the second back end portion 41 are closest to each other. In the folded state, the first back end portion 31 and the second back end portion 41 may be in contact with each other, or need not be in contact with each other. The unfolded state is a state in which the anchor device 20 is most unfolded. In other words, the unfolded state is a state in which the first back end portion 31 and the second back end portion 41 are farthest from each other.

The first plate member 30 includes a first inner surface 35 and a first outer surface 37. The first inner surface 35 is a surface facing the second plate member 40 in the folded state. The first outer surface 37 is a surface that is oriented away from the second plate member 40 in the folded state. The second plate member 40 includes a second inner surface 45 and a second outer surface 47. The second inner surface 45 is a surface facing the first plate member 30 in the folded state. The second outer surface 47 is a surface that is oriented away from the first plate member 30 in the folded state. In the folded state, the first inner surface 35 and the second inner surface 45 face each other, and the first outer surface 37 and the second outer surface 47 are generally oriented away from each other.

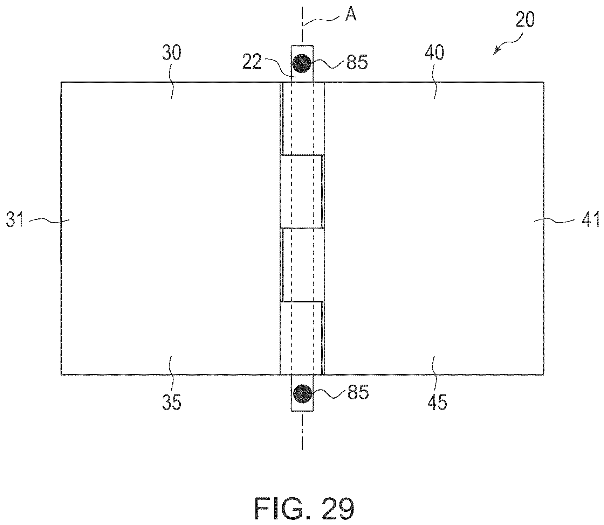

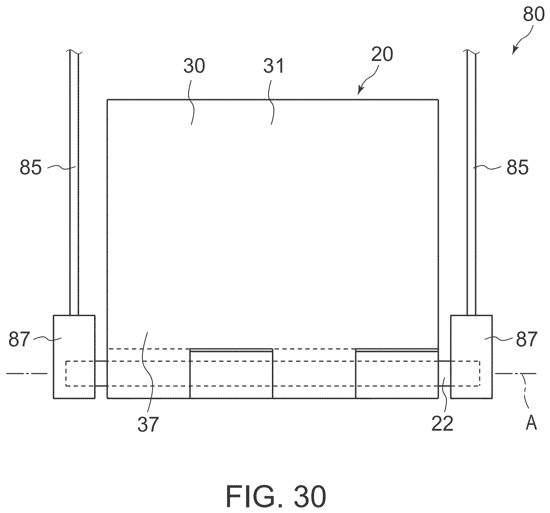

One end of the tension member 85 is attached to the shaft member 22. The tension members 85 are preferably attached to a plurality of positions of the shaft member 22. For example, the tension members 85 may be attached to two positions at both ends of the shaft member 22 (see Figs. 29 and 30). In addition, the tension members 85 attached to two positions at both ends of the shaft member 22 may be configured to be connected to each other and pulled by a single tension member 85.

A method of installing the anchor system 80 of the present embodiment will be described with reference to Figs. 2 to 10.

In Fig. 2, the anchor device 20 in the folded state is illustrated. In the example illustrated in Fig. 2, in the folded state, the first inner surface 35 and the second inner surface 45 face each other, and the first inner surface 35 and the second inner surface 45 are in contact with each other. For the anchor device 20, a projected area thereof as viewed from a lower side (lower side in Fig. 2) is the smallest, in the folded state.

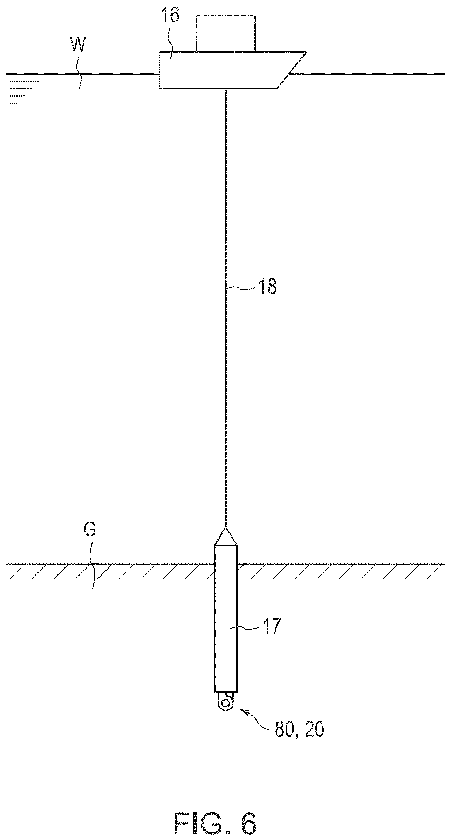

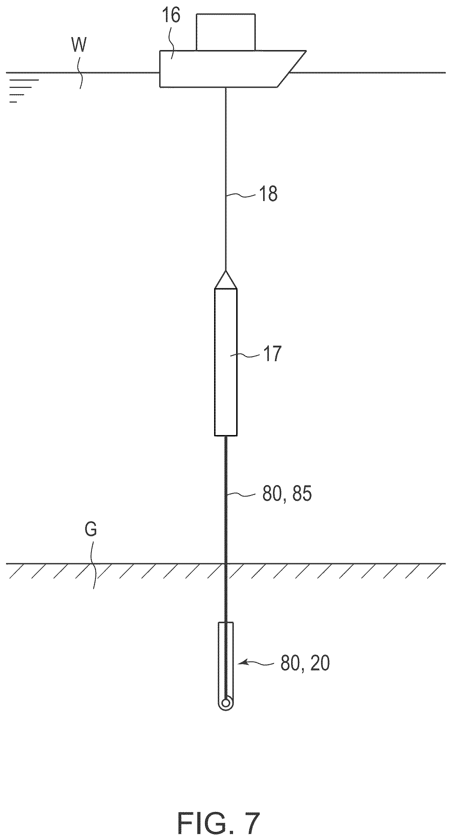

In the present embodiment, the anchor device 20 is placed into the ground layer G in the folded state (see Figs. 2 and 6). In the example illustrated in Fig. 6, the anchor device 20 in the folded state is inserted into the ground layer G by using a suction pile 17. The suction pile 17 is hung down by using a wire rope 18 from a work ship 16 floating on the water layer W. In the present embodiment, the anchor device 20 can be inserted into the ground layer G in the folded state in which the projected area as viewed from the lower side is the smallest. Thus, it is possible to greatly reduce a resistance force that the anchor device 20 receives from the ground layer G. Therefore, the anchor device 20 can be placed into the ground layer G without using a large ship or a large construction machine. Thereafter, as illustrated in Fig. 7, the wire rope 18 is pulled by the work ship 16, whereby the suction pile 17 is pulled up.

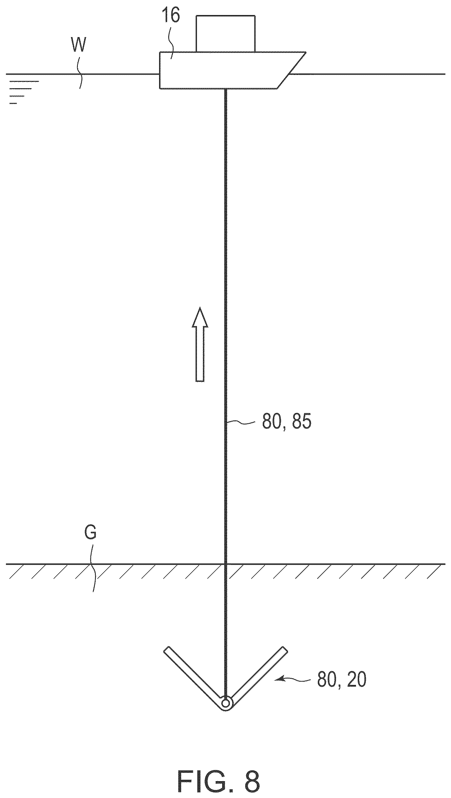

Next, the tension member 85 is pulled by the work ship 16. As a result, the anchor device 20 is being unfolded (see Figs. 3 and 8). When the tension member 85 is pulled, the shaft member 22 is pulled by the tension member 85. At this time, soil or sand forming the ground layer G enters a space between the first plate member 30 and the second plate member 40, and the first plate member 30 and the second plate member 40 are separated from each other.

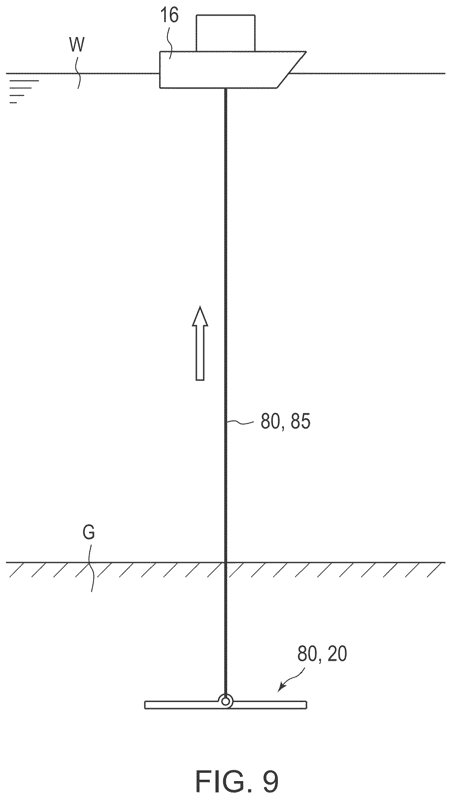

When the tension member 85 is further pulled, the anchor device 20 is brought into the unfolded state (see Figs. 4 and 9). That is, the anchor device 20 is brought into the most unfolded state. An angle θ₁ between the first inner surface 35 and the second inner surface 45 in the unfolded state may be, for example, 90 degrees or more and 180 degrees or less. The angle θ₁ is measured in planes orthogonal to the central axis A. In addition, the angle θ₁ is an angle that does not include the plate members 30, 40, out of two angles formed between the first inner surface 35 and the second inner surface 45.

Note that in particular, in a case where the ground layer G is formed of sand, the anchor device 20 may receive a large resistance force from the ground layer G when the anchor device 20 is placed. In order to reduce the resistance force received from the ground layer G, when the anchor device 20 is unfolded, vibration may be applied to the anchor device 20, or water may be jetted to the ground layer G around the anchor device 20. As a result, the fluidity of the ground layer G around the anchor device 20 increases, and the resistance force that the anchor device 20 receives from the ground layer G can be reduced when the anchor device 20 is placed. In order to apply vibration to the anchor device 20, a vibrator may be attached to the anchor device 20. In addition, in order to jet water to the ground layer G around the anchor device 20, a hose may be provided along the tension member 85, and water may be jetted from the work ship 16 through the hose.

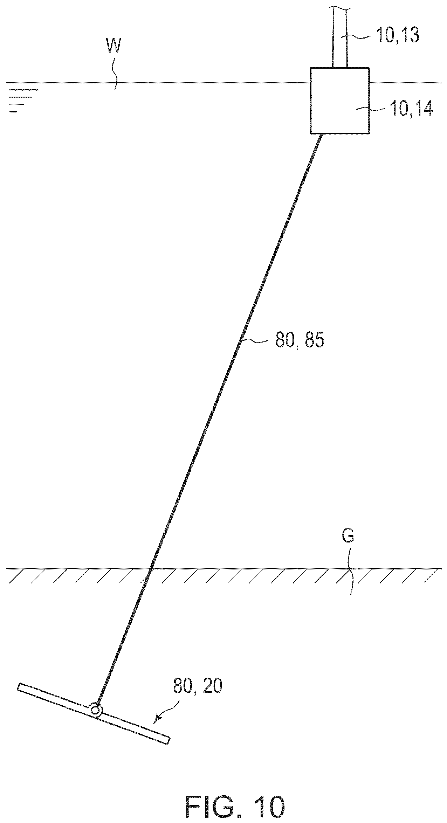

Thereafter, as illustrated in Fig. 10, the tension member 85 is made connected to the wind power generator 10. In this state, one end of the tension member 85 is made connected to the anchor device 20, and the other end of the tension member 85 is made connected to the support 14 of the wind power generator 10. A state in which one anchor system 80 is connected to the wind power generator 10 is illustrated in Fig. 10, but, in practice, the wind power generator 10 is moored to the ground layer G by a plurality of (for example, three or more) anchor systems 80.

For the anchor device 20, a projected area thereof as viewed from a direction opposite to the tension member 85 (a lower side in each of Figs. 4 and 9) is the largest, in the unfolded state. Therefore, when the tension member 85 is pulled in each of Figs. 4, 9, and 10, the anchor device 20 generates high holding power.

The anchor device 20 of the present embodiment includes: the shaft member 22 extending along the central axis A and receiving attachment of the tension member 85; and the first plate member 30 and the second plate member 40 configured to be rotatable relative to each other about the central axis A, in which the first plate member 30 includes the first back end portion 31 farthest from the central axis A in a direction in which the first plate member 30 extends and a direction orthogonal to the central axis A, the second plate member 40 includes the second back end portion 41 farthest from the central axis A in a direction in which the second plate member 40 extends and a direction orthogonal to the central axis A, and the anchor device 20 is configured to be able to change from the folded state in which the first back end portion 31 and the second back end portion 41 are close to each other to the unfolded state in which the first back end portion 31 and the second back end portion 41 are far from each other.

The anchor system 80 of the present embodiment includes the anchor device 20 described above and the tension member 85 attached to the shaft member 22.

The method of installing the anchor system 80 of the present embodiment includes a step of placing the anchor device 20 of the anchor system 80, described above, into the ground layer G in the folded state, and a step of causing the anchor device 20 to change from the folded state to the unfolded state by pulling the tension member 85.

According to such an anchor device 20, an anchor system 80, and a method of installing the anchor system 80, the anchor device 20 can be inserted into the ground layer G in the folded state in which the projected area as viewed from the lower side is the smallest. Thus, it is possible to greatly reduce a resistance force that the anchor device 20 receives from the ground layer G. Therefore, the anchor device 20 can be placed into the ground layer G without using a large ship or a large construction machine. In addition, for the anchor device 20, a projected area thereof as viewed from a direction opposite to the tension member 85 is the largest, in the unfolded state. Therefore, when the tension member 85 is pulled in the unfolded state, the anchor device 20 generates high holding power. That is, according to such an anchor device 20, an anchor system 80, and a method of installing the anchor system 80, it is possible to easily place the anchor device 20 into the ground layer G, and it is possible to exert high holding power after installation.

Various modifications can be made to the embodiment described above. Modifications of the embodiment described above will be described below with appropriate reference to the drawings. In the following description and the drawings used in the following description, the same reference signs as those used for the corresponding portions in the embodiment described above will be used for portions that can be configured similarly to those in the embodiment described above, and redundant description will be omitted.

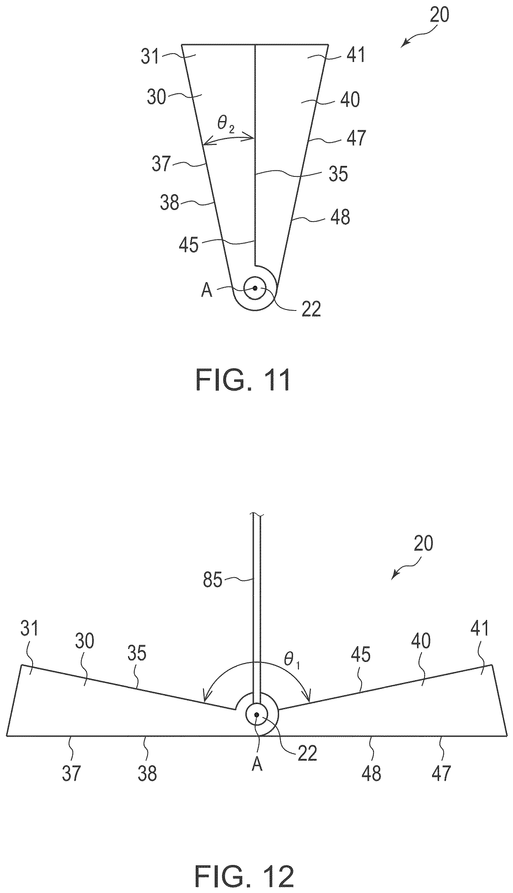

Fig. 11 is a side view illustrating a modification of the anchor device 20 in a folded state, and Fig. 12 is a side view illustrating the anchor device 20 in an unfolded state. Note that in Fig. 11, illustration of the tension member 85 is omitted.

In the anchor device 20 of the present modification, the first outer surface 37 of the first plate member 30 includes a first inclined outer surface 38. The first inclined outer surface 38 is a surface that approaches the second plate member 40 as it approaches the shaft member 22 in the folded state. In addition, the second outer surface 47 of the second plate member 40 includes a second inclined outer surface 48. The second inclined outer surface 48 is a surface that approaches the first plate member 30 as it approaches the shaft member 22 in the folded state. In particular, the anchor device 20 of the present modification includes the first inclined outer surface 38 and the second inclined outer surface 48.

The anchor device 20 includes the first inclined outer surface 38 and/or the second inclined outer surface 48, whereby the anchor device 20 has a generally tapered shape. Specifically, in the side view illustrated in Fig. 11, a width (thickness) of the anchor device 20 decreases as it is closer to the shaft member 22. Thus, when the anchor device 20 is inserted into the ground layer G, the resistance force that the anchor device 20 receives from the ground layer G can be reduced. In addition, the first back end portion 31 and the second back end portion 41 are configured to be wide, and when a tensile force is caused to act on the anchor device 20, although a resistance force received from the ground layer G increases, soil or sand forming the ground layer G is easily gripped at the back end portions 31, 41, and an effect of facilitating unfolding can be expected.

Each of an angle between the inner surface 35 and the inclined outer surface 38 and an angle between the inner surface 45 and the inclined outer surface 48 is θ₂. The angle θ₂ may be, for example, 5 degrees or more and 30 degrees or less. The angle θ₂ is measured in planes orthogonal to the central axis A. In addition, the angle θ₂ is an angle formed inside each of the plate members 30, 40, out of two angles formed between a corresponding one of the inner surfaces 35, 45 and a corresponding one of the inclined outer surfaces 38, 48.

In the anchor device 20 of the present modification, the first plate member 30 includes the first outer surface 37 that is oriented away from the second plate member 40 in the folded state, the second plate member 40 includes the second outer surface 47 that is oriented away from the first plate member 30 in the folded state, the first outer surface 37 includes the first inclined outer surface 38 that approaches the second plate member 40 as the first inclined outer surface 38 approaches the shaft member 22 in the folded state, and the second outer surface 47 includes the second inclined outer surface 48 that approaches the first plate member 30 as the second inclined outer surface 48 approaches the shaft member 22 in the folded state.

According to such an anchor device 20, when the anchor device 20 is inserted into the ground layer G, the resistance force that the anchor device 20 receives from the ground layer G can be reduced. In addition, when the tensile force is caused to act on the anchor device 20, although the resistance force received from the ground layer G increases, an effect of facilitating unfolding can be expected. Therefore, the anchor device 20 can be more easily placed into the ground layer G without using a large ship or a large construction machine.

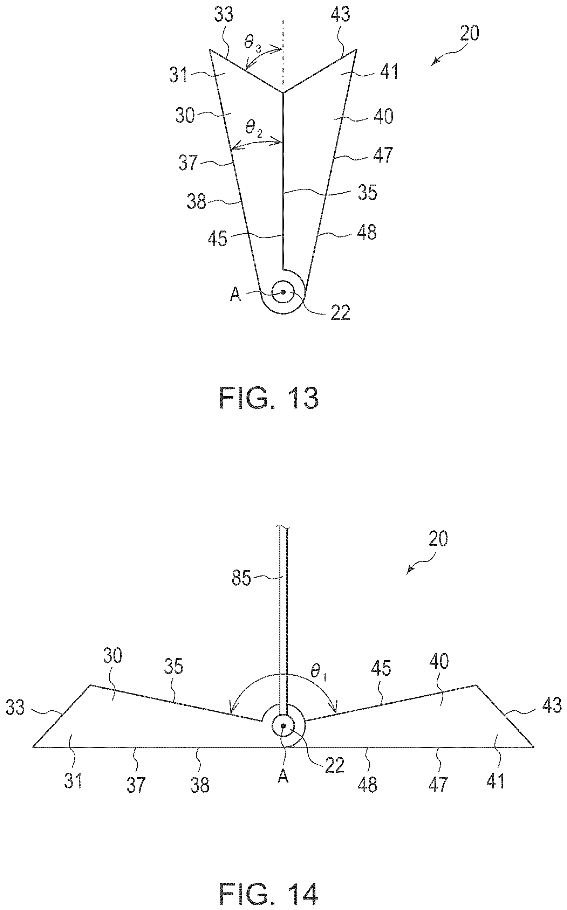

Fig. 13 is a side view illustrating another modification of the anchor device 20 in a folded state, and Fig. 14 is a side view illustrating the anchor device 20 in an unfolded state. Note that in Fig. 13, illustration of the tension member 85 is omitted.

The anchor device 20 of the present modification includes a first inclined end surface 33 of the first plate member 30. The first inclined end surface 33 is a surface that approaches the second plate member 40 as it approaches the shaft member 22 in the folded state. In addition, the second back end portion 41 of the second plate member 40 includes a second inclined end surface 43. The second inclined end surface 43 is a surface that approaches the first plate member 30 as it approaches the shaft member 22 in the folded state. In particular, the anchor device 20 of the present modification includes the first inclined end surface 33 and the second inclined end surface 43.

In the present modification, when the shaft member 22 is pulled through the tension member 85, soil or sand forming the ground layer G enters a space between the first inner surface 35 and the second inner surface 45, along the first inclined end surface 33 and/or the second inclined end surface 43. Therefore, the anchor device 20 can be unfolded with a small displacement amount.

An angle θ₃ between each of the inner surfaces 35, 45 and a corresponding one of the inclined end surfaces 33, 43 may be, for example, 45 degrees or more and 90 degrees or less. The angle θ₃ is measured in planes orthogonal to the central axis A. In addition, the angle θ₃ is an angle formed outside each of the plate members 30, 40, out of two angles formed between a corresponding one of the inner surfaces 35, 45 and a corresponding one of the inclined end surfaces 33, 43.

In the anchor device 20 of the present modification, the first back end portion 31 includes the first inclined end surface 33 that approaches the second plate member 40 as the first inclined end surface 33 approaches the shaft member 22 in the folded state, and the second back end portion 41 includes the second inclined end surface 43 that approaches the first plate member 30 as the second inclined end surface 43 approaches the shaft member 22 in the folded state.

According to such an anchor device 20, in unfolding the anchor device 20, when the shaft member 22 is pulled through the tension member 85, soil or sand forming the ground layer G enters the space between the first inner surface 35 and the second inner surface 45, along the first inclined end surface 33 and/or the second inclined end surface 43. Therefore, the anchor device 20 can be easily unfolded.

In addition, although not illustrated, in another modification, the first plate member 30 and the second plate member 40 may have respective shapes bent in directions of the first outer surface 37 and the second outer surface 47 at respective intermediate portions, in other words, in directions in which the first back end portion 31 and the second back end portion 41 are separated from each other in the folded state. In a case where such shapes are provided, when the tension member 85 is pulled, soil or sand forming the ground layer G enters a space between the first inner surface 35 and the second inner surface 45 of the bent portions. Therefore, the anchor device 20 can be unfolded with a small displacement amount.

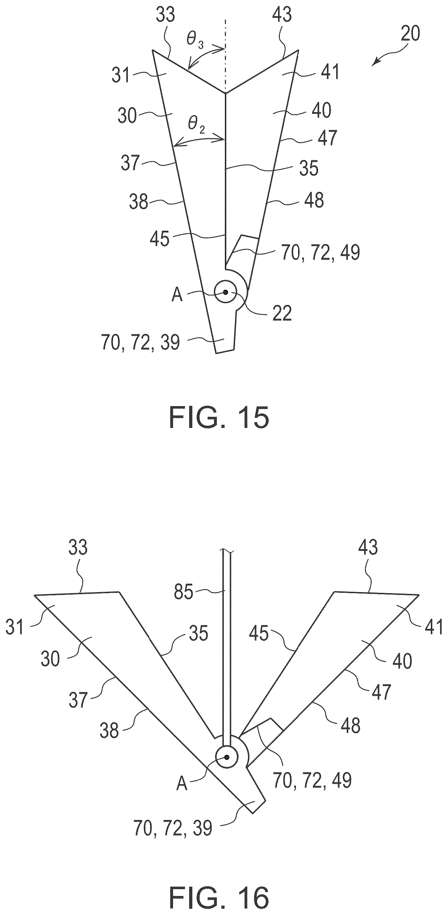

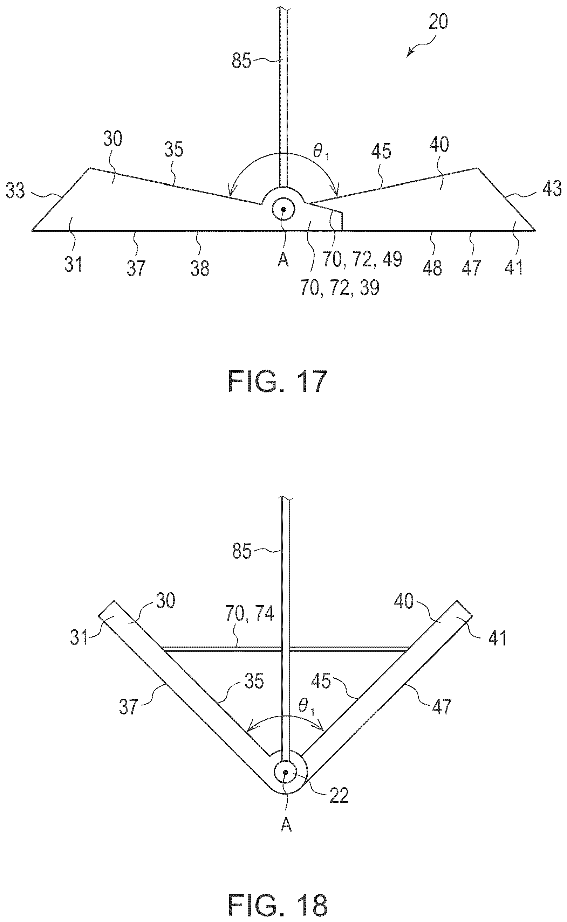

Fig. 15 is a side view illustrating still another modification of the anchor device 20 in a folded state, Fig. 16 is a side view illustrating the anchor device 20 in a state in the middle of being unfolded, and Fig. 17 is a side view illustrating the anchor device 20 in an unfolded state. Note that in Fig. 15, illustration of the tension member 85 is omitted.

The anchor device 20 of the present modification includes a restriction portion 70. In the unfolded state, the restriction portion 70 restricts an angle between the first plate member 30 and the second plate member 40 to a predetermined angle or less.

In the example illustrated in Figs. 15 to 17, the restriction portion 70 includes contact portions 72. The contact portions 72 are portions that come into contact with each other when the angle between the first plate member 30 and the second plate member 40 becomes a predetermined angle. The contact portions 72 include a protrusion portion 39 and a recess portion 49. In the illustrated example, the first plate member 30 includes the protrusion portion 39, and the second plate member 40 includes the recess portion 49. Note that it is not limited to this, and the first plate member 30 may include the recess portion 49 and the second plate member 40 may include the protrusion portion 39.

As illustrated in Figs. 15 to 17, when the anchor device 20 is in the unfolded state, the protrusion portion 39 enters the recess portion 49, and the protrusion portion 39 and the recess portion 49 come into contact with each other. In this state, the angle θ₁ between the first inner surface 35 and the second inner surface 45 does not increase any more. The protrusion portion 39 and the recess portion 49 are configured such that the angle between the first plate member 30 and the second plate member 40 becomes a predetermined angle when the protrusion portion 39 and the recess portion 49 come into contact with each other. Thus, the angle between the first plate member 30 and the second plate member 40 is restricted to a predetermined angle or less.

The anchor device 20 of the present modification includes the restriction portion 70 that restricts the angle between the first plate member 30 and the second plate member 40 to a predetermined angle or less, in the unfolded state.

In addition, in the anchor device 20 of the present modification, the restriction portion 70 includes the contact portions 72 that come into contact with each other when the angle between the first plate member 30 and the second plate member 40 becomes a predetermined angle.

According to such an anchor device 20, the angle between the first plate member 30 and the second plate member 40 can be restricted to a predetermined angle or less. Thus, it is possible to define the angle between the first plate member 30 and the second plate member 40 such that the anchor device 20 exerts high holding power in a state where the anchor device 20 is installed in the ground layer G.

Fig. 18 is a side view illustrating yet another modification of the anchor device 20 in an unfolded state.

In the example illustrated in Fig. 18, the restriction portion 70 includes a connection member 74. The connection member 74 connects the first plate member 30 and the second plate member 40 to each other. The length of the connection member 74 is configured such that the angle θ₁ between the first inner surface 35 and the second inner surface 45 becomes a predetermined angle when the connection member 74 is fully extended (stretched). Thus, the angle between the first plate member 30 and the second plate member 40 in the unfolded state (the angle θ₁ between the first inner surface 35 and the second inner surface 45) is restricted to a predetermined angle or less. The connection member 74 is not particularly limited, but may be formed of, for example, a wire rope, a chain, a bar member, or the like.

In the anchor device 20 of the present modification, the restriction portion 70 includes the connection member 74 that connects the first plate member 30 and the second plate member 40 to each other.

Also according to such an anchor device 20, the angle between the first plate member 30 and the second plate member 40 can be restricted to a predetermined angle or less. Thus, it is possible to define the angle between the first plate member 30 and the second plate member 40 such that the anchor device 20 exerts high holding power in a state where the anchor device 20 is installed in the ground layer G.

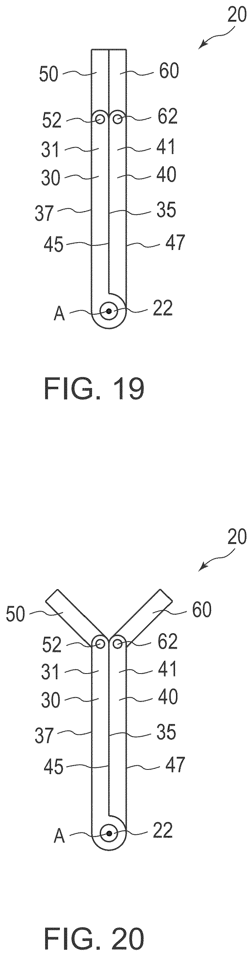

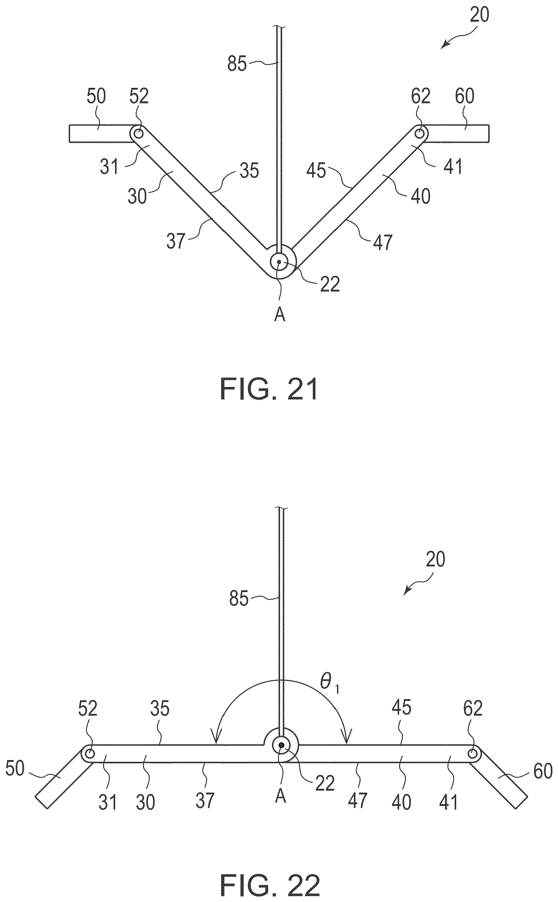

Fig. 19 is a side view illustrating further modification of the anchor device 20 in a folded state, Fig. 20 is a side view illustrating the anchor device 20 in a state in the middle of being unfolded, Fig. 21 is a side view illustrating the anchor device 20 in a state in the middle of being unfolded, and Fig. 22 is a side view illustrating the anchor device 20 in an unfolded state. Note that in each of Figs. 19 and 20, illustration of the tension member 85 is omitted.

In the example illustrated in Figs. 19 to 22, the anchor device 20 includes a third plate member 50 and a fourth plate member 60 in addition to the first plate member 30 and the second plate member 40. The third plate member 50 is connected to the first plate member 30, and is configured to be rotatable relative to the first plate member 30. In particular, the third plate member 50 is configured to be rotatable relative to the first plate member 30 about a rotation shaft 52. The rotation shaft 52 has a central axis extending in parallel with the central axis A. The rotation shaft 52 is a rotation axis for relative rotation of the first plate member 30 and the third plate member 50. The fourth plate member 60 is connected to the second plate member 40, and is configured to be rotatable relative to the second plate member 40. In particular, the fourth plate member 60 is configured to be rotatable relative to the second plate member 40 about a rotation shaft 62. The rotation shaft 62 has a central axis extending in parallel with the central axis A. The rotation shaft 62 is a rotation axis for relative rotation of the second plate member 40 and the fourth plate member 60.

In the example illustrated in Figs. 19 to 22, a length of the third plate member 50 along a direction orthogonal to the central axis A in the folded state is smaller than the length of the first plate member 30. In addition, a length of the fourth plate member 60 along a direction orthogonal to the central axis A in the folded state is smaller than the length of the second plate member 40. The rotation angle of the third plate member 50 relative to the first plate member 30 may be restricted within a predetermined angle. In addition, the rotation angle of the fourth plate member 60 relative to the second plate member 40 may be restricted within a predetermined angle.

In the present modification, in the state illustrated in Fig. 19, when the tension member 85 is pulled, soil or sand forming the ground layer G enters a space between the third plate member 50 and the fourth plate member 60. As a result, as illustrated in Fig. 20, the third plate member 50 rotates about the rotation shaft 52, and the fourth plate member 60 rotates about the rotation shaft 62. Specifically, the third plate member 50 rotates away from the second plate member 40, and the fourth plate member 60 rotates away from the first plate member 30. At this time, since the respective lengths of the third plate member 50 and the fourth plate member 60 are smaller than the respective lengths of the first plate member 30 and the second plate member 40, the third plate member 50 and the fourth plate member 60 respectively rotate relative to the first plate member 30 and the second plate member 40 with relatively small force. In the present modification, in the state illustrated in Fig. 20, the third plate member 50 and the fourth plate member 60 are configured not to respectively rotate any more relative to the first plate member 30 and the second plate member 40.

In the state illustrated in Fig. 20, when the tension member 85 is further pulled, soil or sand forming the ground layer G moves toward a space between the first plate member 30 and the second plate member 40, along an inner surface of the third plate member 50 and an inner surface of the fourth plate member 60. As a result, the soil or sand forming the ground layer G enters the space between the first plate member 30 and the second plate member 40, and the anchor device 20 is unfolded as illustrated in Fig. 21. When the tension member 85 is further pulled, the anchor device 20 is brought into the unfolded state as illustrated in Fig. 22.

The anchor device 20 of the present modification further includes the third plate member 50 connected to the first plate member 30 and configured to be rotatable relative to the first plate member 30, and the fourth plate member 60 connected to the second plate member 40 and configured to be rotatable relative to the second plate member 40.

According to such an anchor device 20, when the tension member 85 is pulled, the third plate member 50 and the fourth plate member 60 respectively rotate relative to the first plate member 30 and the second plate member 40 with relatively small force. As a result, soil or sand forming the ground layer G easily enters the space between the third plate member 50 and the fourth plate member 60. The soil or sand entering the space between the third plate member 50 and the fourth plate member 60 is guided by the inner surface of the third plate member 50 and the inner surface of the fourth plate member 60, and enters the space between the first plate member 30 and the second plate member 40. This allows the anchor device 20 to be easily unfolded.

Note that the anchor device 20 of the present modification may be provided with the first inclined end surface 33 and/or the second inclined end surface 43. In addition, the anchor device 20 of the present modification may be provided with the first inclined outer surface 38 and/or the second inclined outer surface 48.

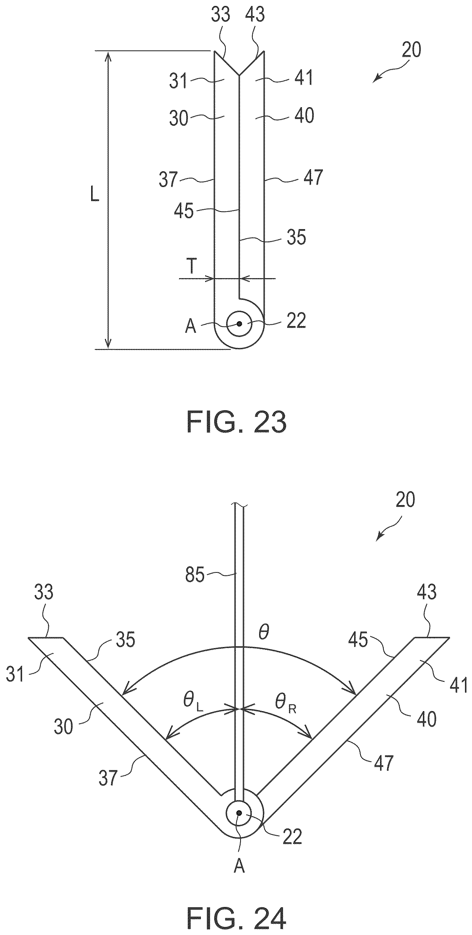

Next, an experiment performed by the present inventors will be described with reference to Figs. 23 to 25. Fig. 23 is a side view illustrating the anchor device 20 used in this experiment in a folded state, and Fig. 24 is a side view illustrating the anchor device 20 in a state in the middle of being unfolded.

The anchor device 20 used in this experiment includes the first inclined end surface 33 and the second inclined end surface 43. On the other hand, the first inner surface 35 and the first outer surface 37 of the first plate member 30 are parallel to each other. In addition, the second inner surface 45 and the second outer surface 47 of the second plate member 40 are parallel to each other. A total length L (see Fig. 23) of each of the first plate member 30 and the second plate member 40 along a direction orthogonal to the central axis A was set to 40 mm. A thickness T of each of the first plate member 30 and the second plate member 40 was set to 3 mm. In addition, a depth of each of the first plate member 30 and the second plate member 40 in a direction parallel to the central axis A (direction perpendicular to the plane of Fig. 23) was set to 40 mm.

As illustrated in Fig. 24, an angle between the first inner surface 35 and the second inner surface 45 in a state in the middle of unfolding is defined as θ. In addition, an angle between the central axis of the tension member 85 and the first inner surface 35, in Fig. 24 is defined as θ_{L}, and an angle between the central axis of the tension member 85 and the second inner surface 45, in Fig. 24 is defined as θ_{R}. The angles θ, θ_{L}, and θ_{R} are each measured in planes orthogonal to the central axis A.

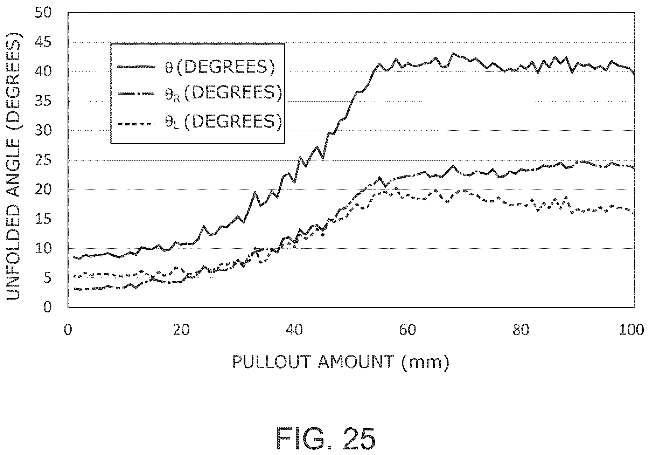

A large number of quartz particles and fluid having the same refractive index as the refractive index of the quartz particles were mixed to prepare a transparent ground. This transparent ground imitates the ground layer G, and is formed to allow the inside of the ground to be visible from the outside. The anchor device 20 illustrated in Figs. 23 and 24 was embedded in the ground such that the shaft member 22 was located on a lower side. The tension members 85 extending in the vertical direction were attached to both ends of the shaft member 22. The anchor device 20 was pulled upward through the tension member 85 while the anchor device 20 was photographed from an extending direction of the shaft member 22 by using a camera. A relationship between a pullout amount (mm) of the anchor device 20 and each of the unfolded angles θ, θ_{L}, θ_{R} (degrees) of the anchor device 20 at this time is illustrated in Fig. 25. Note that for the pullout amount (mm), a displacement amount, in the vertical direction, of a member connected to the tension member 85 was measured by using a laser displacement meter. The unfolded angles θ, θ_{L}, θ_{R} (degrees) were measured from images photographed by the camera.

From the experimental result illustrated in Fig. 25, it can be seen that the unfolded angles θ, θ_{L}, θ_{R} also increase as the pullout amount increases. That is, it was confirmed that the anchor device 20 can be appropriately unfolded from the folded state only by pulling the anchor device 20 upward through the tension member 85. In addition, the angle θ_{L} and the angle θ_{R} were substantially the same measure throughout the pullout step of the anchor device 20. From this, it was also confirmed that the first plate member 30 and the second plate member 40 can be unfolded substantially symmetrically by configuring the first plate member 30 and the second plate member 40 in a symmetrical shape and pulling the anchor device 20 in the same direction as the extending direction of the first plate member 30 and the second plate member 40 in the folded state.

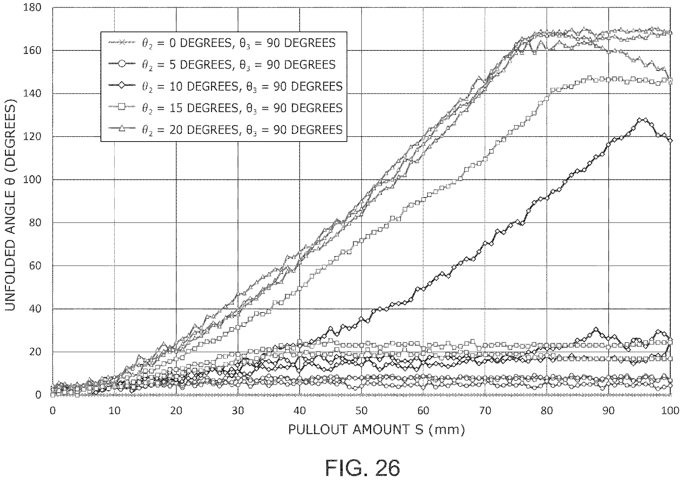

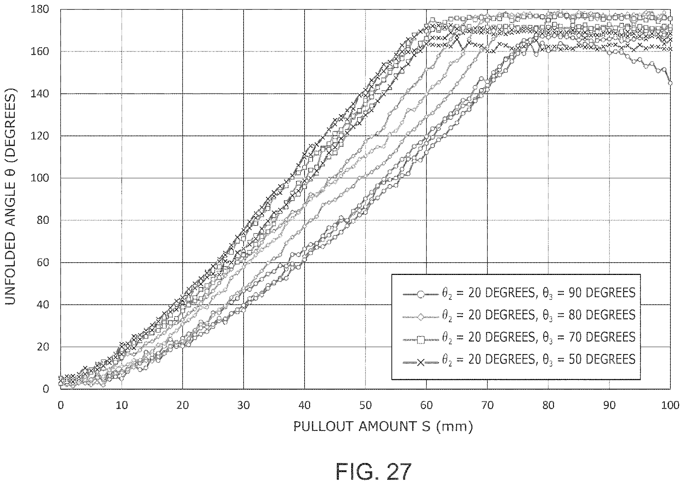

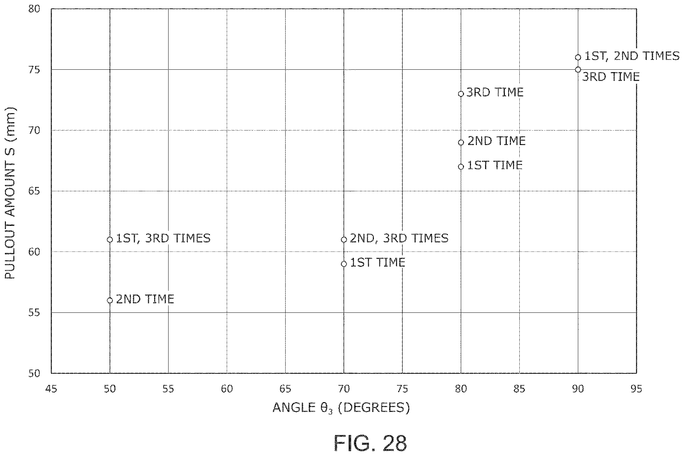

Next, other experiments performed by the present inventors will be described with reference to Figs. 26 to 28. The anchor device 20 used in these experiments is the anchor device 20 described with reference to Figs. 11 to 14. θ is an unfolded angle between the first inner surface 35 and the second inner surface 45 in a state in the middle of unfolding. θ₂ is each of the angle between the inner surface 35 and the inclined outer surface 38 and the angle between the inner surface 45 and the inclined outer surface 48. θ₃ is the angle between each of the inner surfaces 35, 45 and the corresponding one of the inclined end surfaces 33, 43. Therefore, in a case where the angle θ₃ = 90 degrees, the anchor device 20 is similar to the anchor device 20 described with reference to Figs. 11 and 12. In addition, in a case where the angle θ₃ = 50 degrees to 80 degrees, the anchor device 20 is similar to the anchor device 20 described with reference to Figs. 13 and 14. Fig. 26 is a graph illustrating a relationship between the pullout amount S (mm) and the unfolded angle θ (degrees) of the anchor device 20, when the angle θ₂ of the anchor device 20 is changed. Fig. 27 is a graph illustrating a relationship between the pullout amount S (mm) and the unfolded angle θ (degrees) of the anchor device 20, when the angle θ₂ of the anchor device 20 is fixed to 20 degrees and the angle θ₃ is changed. Fig. 28 is a graph illustrating a relationship between the angle θ₃ and the pullout amount S in a state where unfolding of the anchor device 20 converges, when the angle θ₂ of the anchor device 20 is fixed to 20 degrees.

Fig. 26 illustrates a relationship between the pullout amount S (mm) of the anchor device 20 and the unfolded angle θ (degrees) between the first inner surface 35 and the second inner surface 45 in a state in the middle of unfolding, when the angle θ₂ is changed to 0 degrees, 5 degrees, 10 degrees, 15 degrees, and 20 degrees and the angle θ₃ is fixed to 90 degrees. Note that three pullout experiments were performed for one combination of the angle θ₂ and the angle θ₃. From the experimental results illustrated in Fig. 26, it can be seen that, except for the case of the angle θ₂ = 0 degrees, the unfolded angle θ also increases with an increase in the pullout amount S, and that convergence to some angles occurs after the pull by a certain amount (pullout amount S < 100 mm). From Fig. 26, it can be confirmed that an amount of increase in the unfolded angle θ with respect to a pullout increment tends to increase as the angle θ₂ increases. In addition, it can be seen that the reliability of unfolding (the probability that the unfolded angle θ > 120 degrees is obtained when the pullout amount S < 100 mm) also increases with an increase in the angle θ₂. In particular, it was confirmed that the anchor device 20 can be reliably unfolded from the folded state to the pullout amount S < 80 mm only by pulling the anchor device 20 upward through the tension member 85 at the angle θ₂ = 20 degrees.

Fig. 27 illustrates a relationship between the pullout amount S (mm) of the anchor device 20 and the unfolded angle θ (degrees) between the first inner surface 35 and the second inner surface 45 in a state in the middle of unfolding, when the angle θ₂ is fixed to 20 degrees and the angle θ₃ is changed to 90 degrees, 80 degrees, 70 degrees, and 50 degrees. Note that three pullout experiments were performed for one combination of the angle θ₂ and the angle θ₃. From the experimental results illustrated in Fig. 27, it can be seen that the unfolded angle θ increases with an increase in the pullout amount S in all cases, and that the anchor device 20 is reliably unfolded (the unfolded angle θ > 160 degrees at the pullout amount S < 100 mm). From Fig. 27, it was confirmed that a final unfolded angle θ does not greatly depend on the angle θ₃ and becomes 160 degrees < θ < 180 degrees. On the other hand, it can be seen that an amount of increase in the unfolded angle θ with respect to a pullout increment tends to increase with a decrease in the angle θ₃.

Fig. 28 is one in which the pullout amount S in a state where an increment of the angle θ₃ with respect to an increment of the pullout amount S becomes less than 1 degree/mm at the unfolded angle θ > 150 degrees and unfolding converges is organized with respect to the angle θ₃. From Fig. 28, it was confirmed that with a decrease in the angle θ₃, unfolding of the anchor device 20 with a smaller pullout amount S is realized, leading to improvement of ease of construction.

Fig. 29 is a plan view illustrating an example of attachment positions of the tension members 85 in the anchor device 20, and Fig. 30 is a side view illustrating the anchor device 20 of Fig. 29 in a folded state.

In the example illustrated in Figs. 29 and 30, the tension members 85 are attached to two positions on both ends of the shaft member 22. More specifically, as illustrated in Fig. 30, the tension members 85 are attached through attachment members 87 at two positions on both ends of the shaft member 22. One end of the tension member 85 is fixed to a corresponding one of the attachment members 87. The attachment member 87 may be fixed to the shaft member 22 so as not to rotate about the central axis A relative to the shaft member 22. Alternatively, the attachment member 87 may be attached so as to be rotatable about the central axis A relative to the shaft member 22.

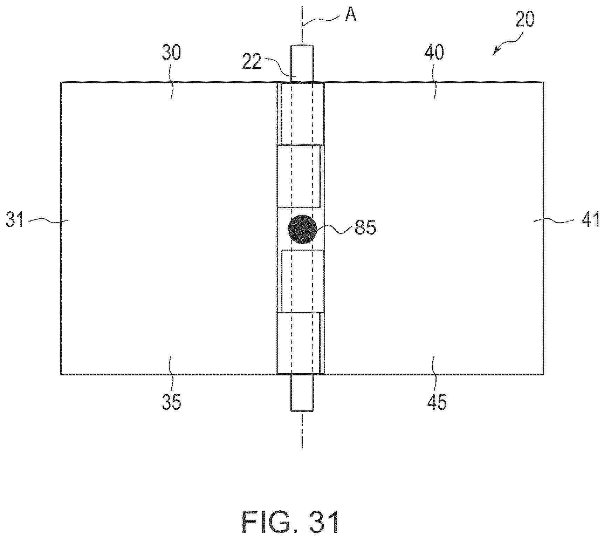

Fig. 31 is a plan view illustrating another example of an attachment position of the tension member 85 in the anchor device 20. In the example illustrated in Fig. 31, the tension member 85 is attached to one position of a middle portion of the shaft member 22. The tension member 85 may be attached to the shaft member 22 through the attachment member 87 described with reference to Fig. 30.

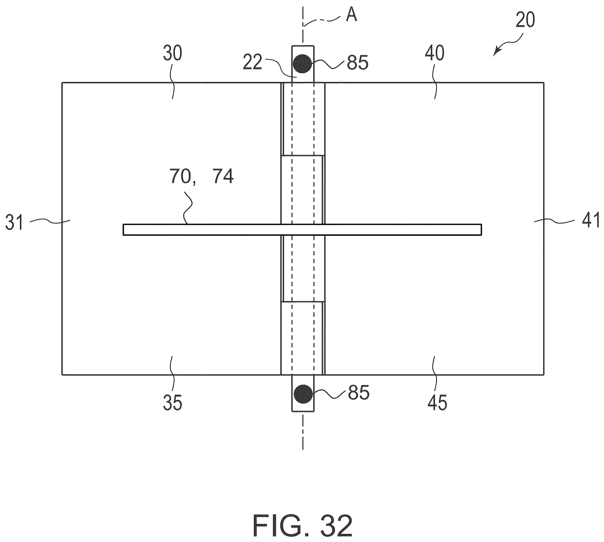

Fig. 32 is a plan view illustrating still another example of attachment positions of the tension members 85 in an anchor device. The anchor device 20 in the example illustrated in Fig. 32 is the anchor device 20 described with reference to Fig. 18. The tension member 85 may be attached to the shaft member 22 through the attachment member 87 described with reference to Fig. 30.

### Second Embodiment

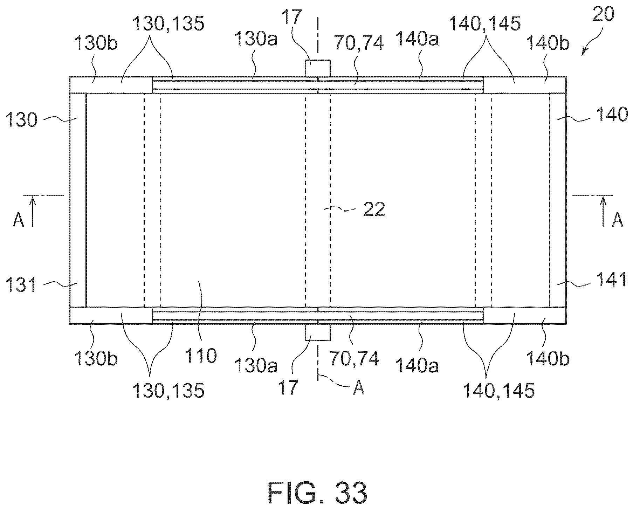

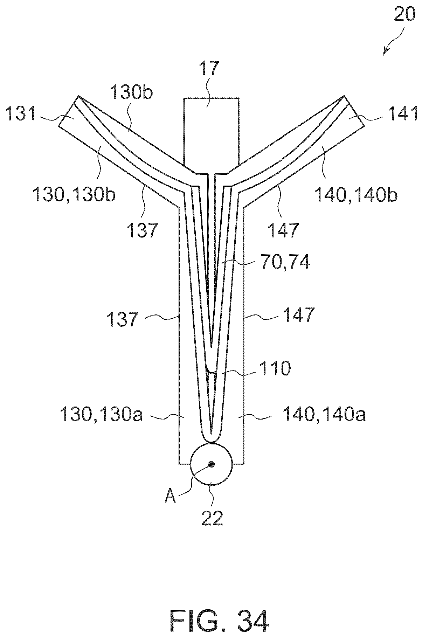

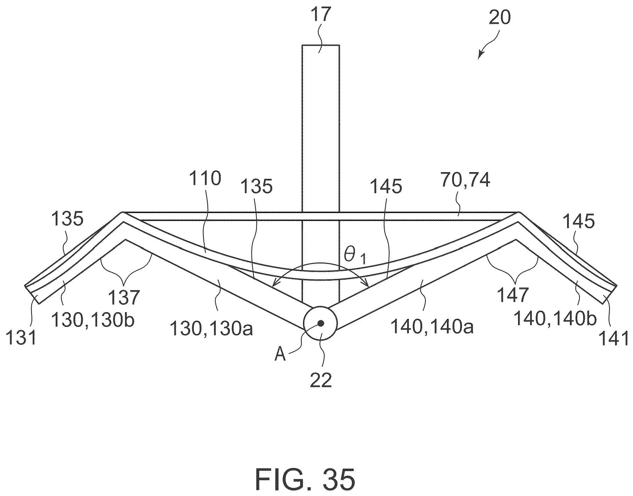

Fig. 33 is a view for explaining a second embodiment of the present invention, and is a plan view illustrating an example of the anchor device 20 in an unfolded state. Fig. 34 is a view illustrating the anchor device 20 of Fig. 33 in a folded state, and is a cross-sectional view corresponding to line A-A of Fig. 33. Fig. 35 is a view illustrating the anchor device 20 of Fig. 33 in an unfolded state, and is a cross-sectional view corresponding to line A-A of Fig. 33. In the second embodiment, the same reference signs as those used for the corresponding portions in the first embodiment will be used for portions that can be configured similarly to those in the first embodiment, and redundant description will be omitted.

The anchor device 20 includes the shaft member 22, a first frame member 130, a second frame member 140, a pressure receiving member 110, and the restriction portion 70. The first frame member 130 and the second frame member 140 each have a substantially frame shape. The shaft member 22 has a circular columnar shape, and extends along the central axis A. The central axis A is a rotation axis for relative rotation of the first frame member 130 and the second frame member 140. The first frame member 130 and the second frame member 140 are each attached to the shaft member 22. The first frame member 130 and the second frame member 140 are configured to be rotatable relative to each other about the central axis A.

The first frame member 130 includes a first back end portion 131. The first back end portion 131 is an end portion in the first frame member 130, far from the central axis A. The second frame member 140 includes a second back end portion 141. The second back end portion 141 is an end portion in the second frame member 140, far from the central axis A. The anchor device 20 of the present embodiment is configured to be able to change from a folded state to an unfolded state, similarly to the first embodiment.

In the example illustrated in Fig. 34, each of the first frame member 130 and the second frame member 140 has a bent shape at an intermediate portion. The first frame member 130 includes a first portion 130a and a second portion 130b. The first portion 130a and the second portion 130b are fixed to each other. That is, the angle between the first portion 130a and the second portion 130b is always constant. One end of the first portion 130a is rotatably connected to the shaft member 22, and the other end of the first portion 130a is fixed to the second portion 130b. One end of the second portion 130b is fixed to the other end of the first portion 130a, and the other end of the second portion 130b is a free end.

In addition, the second frame member 140 includes a first portion 140a and a second portion 140b. The first portion 140a and the second portion 140b are fixed to each other. That is, the angle between the first portion 140a and the second portion 140b is always constant. The angle between the first portion 140a and the second portion 140b in the second frame member 140 may be the same as or different from the angle between the first portion 130a and the second portion 130b in the first frame member 130. One end of the first portion 140a is rotatably connected to the shaft member 22, and the other end of the first portion 140a is fixed to the second portion 140b. One end of the second portion 140b is fixed to the other end of the first portion 140a, and the other end of the second portion 140b is a free end.

In the folded state illustrated in Fig. 34, the first portion 130a of the first frame member 130 and the first portion 140a of the second frame member 140 extend substantially parallel to each other. The second portion 130b of the first frame member 130 extends in a direction inclined with respect to the first portion 130a such that the second portion 130b becomes farther from the second frame member 140 as the second portion 130b becomes farther from the shaft member 22. In addition, the second portion 140b of the second frame member 140 extends in a direction inclined with respect to the first portion 140a such that the second portion 140b becomes farther from the first frame member 130 as the second portion 140b becomes farther from the shaft member 22.

The respective lengths of the first portion 130a and the second portion 130b of the first frame member 130 and the respective lengths of the first portion 140a and the second portion 140b of the second frame member 140 are not particularly limited. The length of the first portion 130a of the first frame member 130 and the length of the first portion 140a of the second frame member 140 may be the same as each other or may be different from each other. In addition, the length of the second portion 130b of the first frame member 130 and the length of the second portion 140b of the second frame member 140 may be the same as each other or may be different from each other.

Note that it is not limited to this, and each of the first frame member 130 and the second frame member 140 need not have a bent shape at the intermediate portion. For example, each of the first frame member 130 and the second frame member 140 may have a linear shape, as viewed from a direction along the central axis A of the shaft member 22.

The first frame member 130 includes a first inner surface 135 and a first outer surface 137. The first inner surface 135 is a surface facing the second frame member 140 in the folded state. The first outer surface 137 is a surface that is oriented away from the second frame member 140 in the folded state. The second frame member 140 includes a second inner surface 145 and a second outer surface 147. The second inner surface 145 is a surface facing the first frame member 130 in the folded state. The second outer surface 147 is a surface that is oriented away from the first frame member 130 in the folded state. In the folded state, the first inner surface 135 and the second inner surface 145 face each other, and the first outer surface 137 and the second outer surface 147 are generally oriented away from each other.

Although not illustrated in the present embodiment, the tension member 85 is attached to the shaft member 22. The tension member 85 may be attached to the shaft member 22, for example, in a manner similar to the examples described with reference to Figs. 29 to 32.

The pressure receiving member 110 is caused to extend across the first frame member 130 and the second frame member 140. The pressure receiving member 110 has a function of receiving pressure that acts on the anchor device 20 from the ground layer G. The pressure receiving member 110 is fixed to each of the first frame member 130 and the second frame member 140 at a peripheral edge portion of the pressure receiving member 110. In particular, the pressure receiving member 110 is preferably fixed to the first frame member 130 and the second frame member 140 throughout the entire length of the peripheral edge portion. In the present embodiment, the pressure receiving member 110 has a rectangular shape in plan view. In this case, in all of the four sides of the pressure receiving member 110, the pressure receiving member 110 is fixed to the first frame member 130 and the second frame member 140.

The pressure receiving member 110 is formed of a member that can withstand the pressure received from the ground layer G. Such a pressure receiving member 110 can be formed of a member having flexibility (flexible member) or a member having no flexibility (non-flexible member). As the flexible member, for example, a sheet-like member or a net-like member can be used. As the non-flexible member, for example, a plate-like member can be used.

The restriction portion 70 of the present embodiment includes the connection member 74. The connection member 74 connects the first frame member 130 and the second frame member 140 to each other. In particular, in the present embodiment, the restriction portion 70 includes two connection members 74.

The anchor system 80 including the anchor device 20 of the present embodiment is installed in a manner similar to the installation method described with reference to Figs. 6 to 10 in the first embodiment.

Fig. 34 illustrates the anchor device 20 in a folded state. In the example illustrated in Fig. 34, in the folded state, the first inner surface 135 and the second inner surface 145 face each other, and the first inner surface 135 and the second inner surface 145 are close to each other. At this time, the pressure receiving member 110 is brought into a state of being folded between the first inner surface 135 and the second inner surface 145. For the anchor device 20, a projected area thereof as viewed from a lower side (lower side in Fig. 34) is the smallest, in the folded state.

Similarly to the first embodiment, the anchor device 20 is placed into the ground layer G in the folded state. Next, the tension member 85 is pulled by the work ship 16. As a result, the anchor device 20 is being unfolded. When the tension member 85 is pulled, the shaft member 22 is pulled by the tension member 85. At this time, soil or sand forming the ground layer G enters an intermediate space of the folded pressure receiving member 110, and the first frame member 130 and the second frame member 140 are separated from each other.

When the tension member 85 is further pulled, the connection member 74 is fully extended, and the angle θ₁ between the first inner surface 135 and the second inner surface 145 becomes a predetermined angle (see Fig. 35). At this time, the anchor device 20 is brought into an unfolded state. That is, the anchor device 20 is brought into the most unfolded state. At this time, pressure received by the anchor device 20 from the ground layer G when the tension member 85 is pulled acts on the pressure receiving member 110. That is, the pressure receiving member 110 receives the pressure that acts on the anchor device 20 from the ground layer G.

In a case where each of the first frame member 130 and the second frame member 140 has a bent shape at the intermediate portion as illustrated in Fig. 34, when the tension member 85 is pulled, soil or sand forming the ground layer G enters a space between the first inner surface 135 and the second inner surface 145, along the second portion 130b of the first frame member 130 and/or the second portion 140b of the second frame member 140. Therefore, the anchor device 20 can be unfolded with a small displacement amount.

Note that the angle θ₁ between the first inner surface 135 and the second inner surface 145 in the unfolded state may be set similarly to θ₁ in the first embodiment.

The anchor device 20 of the present embodiment includes: the shaft member 22 extending along the central axis A and receiving attachment of the tension member 85; the first frame member 130 and the second frame member 140 configured to be rotatable relative to each other about the central axis A; and the pressure receiving member 110 caused to extend across the first frame member 130 and the second frame member 140, in which the first frame member 130 includes the first back end portion 131 farthest from the central axis A in a direction orthogonal to the central axis A, the second frame member 140 includes the second back end portion 141 farthest from the central axis A in a direction orthogonal to the central axis A, and the anchor device 20 is configured to be able to change from the folded state in which the first back end portion 131 and the second back end portion 141 are close to each other to the unfolded state in which the first back end portion 131 and the second back end portion 141 are far from each other.

Also according to such an anchor device 20, the anchor device 20 can be inserted into the ground layer G in the folded state in which the projected area as viewed from the lower side is the smallest. Thus, it is possible to greatly reduce a resistance force that the anchor device 20 receives from the ground layer G. Therefore, the anchor device 20 can be placed into the ground layer G without using a large ship or a large construction machine. In addition, for the anchor device 20, a projected area thereof as viewed from a direction opposite to the tension member 85 is the largest, in the unfolded state. Therefore, when the tension member 85 is pulled in the unfolded state, the anchor device 20 generates high holding power. That is, according to such an anchor device 20, it is possible to easily place the anchor device 20 into the ground layer G, and it is possible to exert high holding power after installation.

The anchor device 20 of the present embodiment includes the restriction portion 70 that restricts the angle between the first frame member 130 and the second frame member 140 to a predetermined angle or less, in the unfolded state.

In the anchor device 20 of the present embodiment, the restriction portion 70 includes the connection member 74 that connects the first frame member 130 and the second frame member 140 to each other.

According to such an anchor device 20, the angle between the first frame member 130 and the second frame member 140 can be restricted to a predetermined angle or less. Thus, it is possible to define the angle between the first frame member 130 and the second frame member 140 such that the anchor device 20 exerts high holding power in a state where the anchor device 20 is installed in the ground layer G.

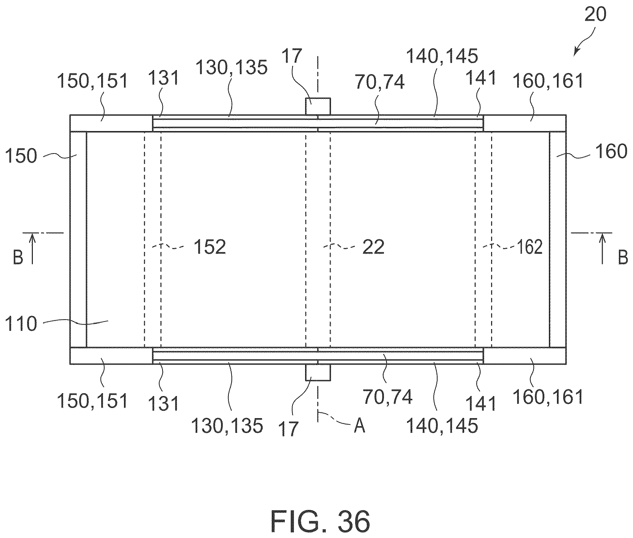

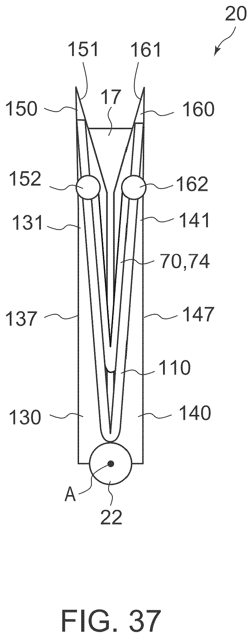

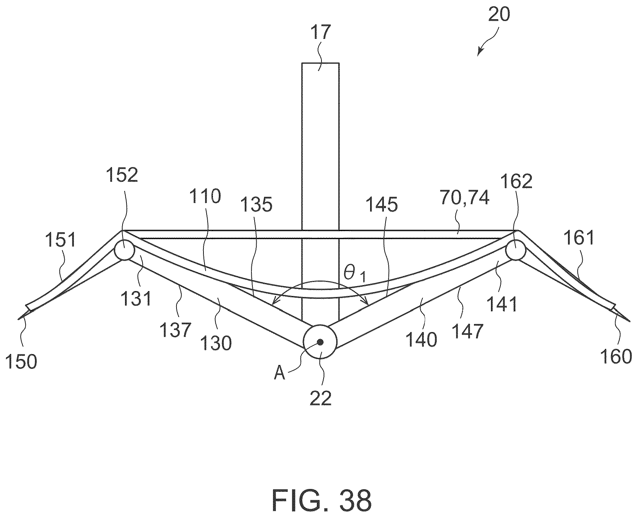

Fig. 36 is a plan view illustrating another example of the anchor device 20 of the second embodiment in an unfolded state. Fig. 37 is a view illustrating the anchor device 20 of Fig. 36 in a folded state, and is a cross-sectional view corresponding to line B-B of Fig. 36. Fig. 38 is a view illustrating the anchor device 20 of Fig. 36 in an unfolded state, and is a cross-sectional view corresponding to line B-B of Fig. 36.

In the example illustrated in Figs. 36 to 38, the anchor device 20 further includes a third frame member 150 and a fourth frame member 160. The pressure receiving member 110 is caused to extend across the first frame member 130, the second frame member 140, the third frame member 150, and the fourth frame member 160.

The third frame member 150 is connected to the first frame member 130, and is configured to be rotatable relative to the first frame member 130. In particular, the third frame member 150 is configured to be rotatable relative to the first frame member 130 about a rotation shaft 152. The rotation shaft 152 has a central axis extending in parallel with the central axis A. The rotation shaft 152 is a rotation axis for relative rotation of the first frame member 130 and the third frame member 150.

The fourth frame member 160 is connected to the second frame member 140, and is configured to be rotatable relative to the second frame member 140. In particular, the fourth frame member 160 is configured to be rotatable relative to the second frame member 140 about a rotation shaft 162. The rotation shaft 162 has a central axis extending in parallel with the central axis A. The rotation shaft 162 is a rotation axis for relative rotation of the second frame member 140 and the fourth frame member 160.

In the example illustrated in Figs. 37 and 38, the third frame member 150 has a tapered shape in which a thickness thereof decreases as the third frame member 150 becomes farther from the rotation shaft 152. In addition, the fourth frame member 160 has a tapered shape in which a thickness thereof decreases as the fourth frame member 160 becomes farther from the rotation shaft 162. In particular, in the folded state illustrated in Fig. 37, an inner surface 151 of the third frame member 150 extends in an inclined direction such that the inner surface 151 becomes farther from the fourth frame member 160 as the inner surface 151 becomes farther from the rotation shaft 152. In addition, in the folded state, an inner surface 161 of the fourth frame member 160 extends in an inclined direction such that the inner surface 161 becomes farther from the third frame member 150 as the inner surface 161 becomes farther from the rotation shaft 162. Note that it is not limited to this, and the third frame member 150 may have a constant thickness regardless of the distance from the rotation shaft 152. In addition, the fourth frame member 160 may have a constant thickness regardless of the distance from the rotation shaft 162.

In the example illustrated in Figs. 36 to 38, a length of the third frame member 150 along a direction orthogonal to the central axis A in the folded state is smaller than the length of the first frame member 130. In addition, a length of the fourth frame member 160 along a direction orthogonal to the central axis A in the folded state is smaller than the length of the second frame member 140. The rotation angle of the third frame member 150 relative to the first frame member 130 may be restricted within a predetermined angle. In addition, the rotation angle of the fourth frame member 160 relative to the second frame member 140 may be restricted within a predetermined angle.

The respective lengths of the first frame member 130, the second frame member 140, the third frame member 150, and the fourth frame member 160 are not particularly limited. The length of the first frame member 130 and the length of the second frame member 140 may be the same as each other or may be different from each other. In addition, the length of the third frame member 150 and the length of the fourth frame member 160 may be the same as each other or may be different from each other.

The third frame member 150 and the fourth frame member 160 of the present embodiment function similarly to the third plate member 50 and the fourth plate member 60 of the first embodiment, and thus detailed description thereof is omitted.

The anchor device 20 of the present modification further includes the third frame member 150 connected to the first frame member 130 and configured to be rotatable relative to the first frame member 130, and the fourth frame member 160 connected to the second frame member 140 and configured to be rotatable relative to the second frame member 140.

According to such an anchor device 20, when the tension member 85 is pulled, the third frame member 150 and the fourth frame member 160 respectively rotate relative to the first frame member 130 and the second frame member 140 with relatively small force. As a result, soil or sand forming the ground layer G easily enters an intermediate space of the folded pressure receiving member 110. Soil or sand entering a space between the third frame member 150 and the fourth frame member 160 is guided by a portion of the pressure receiving member 110 overlapping the third frame member 150 and a portion of the pressure receiving member 110 overlapping the fourth frame member 160, and enters a space between a portion overlapping the first frame member 130 and a portion overlapping the second frame member 140. This allows the anchor device 20 to be easily unfolded.

In particular, in a case where the inner surface 151 of the third frame member 150 and/or the inner surface 161 of the fourth frame member 160 extend in the inclined directions in the folded state as illustrated in Fig. 37, when the tension member 85 is pulled, soil or sand forming the ground layer G enters a space between the first inner surface 135 and the second inner surface 145, along the inner surface 151 of the third frame member 150 and/or the inner surface 161 of the fourth frame member 160. Therefore, the anchor device 20 can be more easily unfolded.

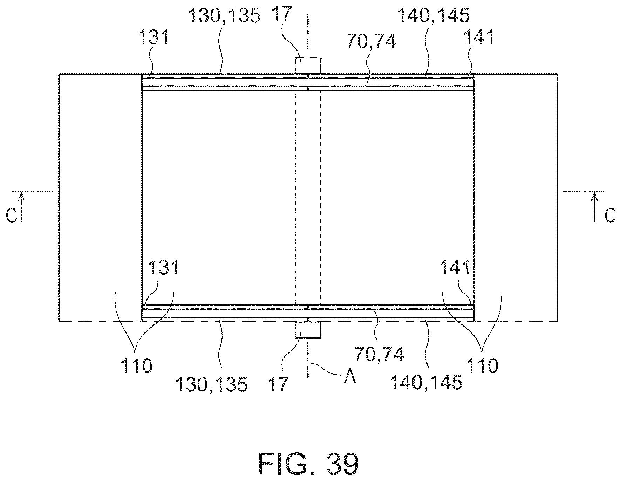

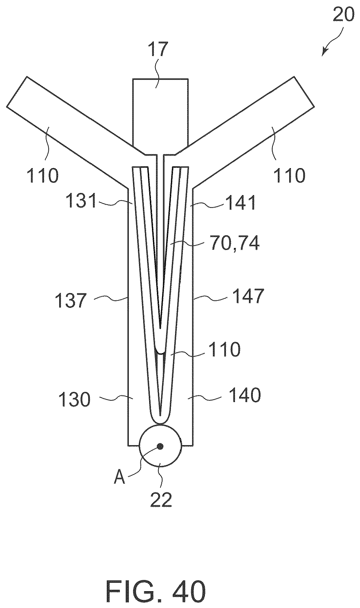

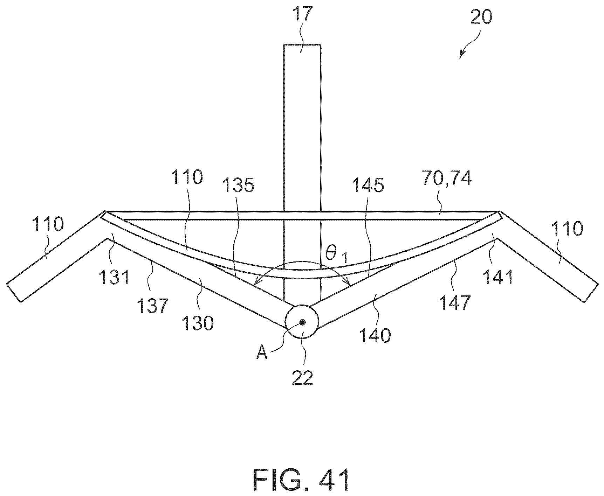

Fig. 39 is a plan view illustrating still another example of the anchor device 20 of the second embodiment in an unfolded state. Fig. 40 is a view illustrating the anchor device 20 of Fig. 39 in a folded state, and is a cross-sectional view corresponding to line C-C of Fig. 39. Fig. 41 is a view illustrating the anchor device 20 of Fig. 39 in an unfolded state, and is a cross-sectional view corresponding to line C-C of Fig. 39.

The present modification is different from the example described with reference to Figs. 33 to 35 in that the pressure receiving member 110 is formed by a combination of a flexible member and a non-flexible member. In particular, in the present modification, a part of the pressure receiving member 110 close to the shaft member 22 is formed of a flexible member, and parts of the pressure receiving member 110 farther from the shaft member 22 are formed of non-flexible members.

Also according to such an anchor device 20, the anchor device 20 can be inserted into the ground layer G in the folded state in which the projected area as viewed from the lower side is the smallest. Thus, it is possible to greatly reduce a resistance force that the anchor device 20 receives from the ground layer G. Therefore, the anchor device 20 can be placed into the ground layer G without using a large ship or a large construction machine. In addition, for the anchor device 20, a projected area thereof as viewed from a direction opposite to the tension member 85 is the largest, in the unfolded state. Therefore, when the tension member 85 is pulled in the unfolded state, the anchor device 20 generates high holding power. That is, according to such an anchor device 20, it is possible to easily place the anchor device 20 into the ground layer G, and it is possible to exert high holding power after installation.

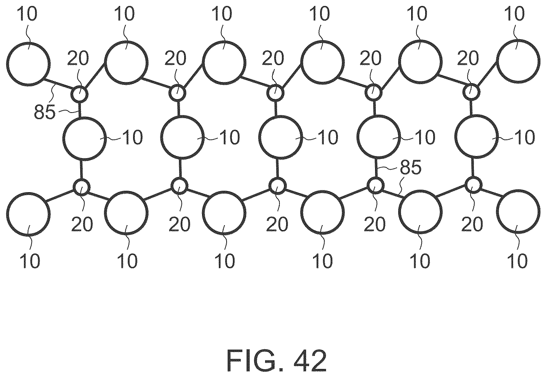

Fig. 42 is a top view illustrating an example of an arrangement of the wind power generators 10 and the anchor systems 80.

In the example illustrated in Fig. 42, a plurality of wind power generators 10 and a plurality of anchor devices 20 are arranged. One wind power generator 10 is fixed to the ground layer G through a plurality of anchor devices 20. In addition, one anchor device 20 fixes a plurality of wind power generators 10 to the ground layer G.

In each of many conventional anchor devices, pulling installation is performed in a manner to be shifted in the horizontal direction from the embedded position of the anchor device in the ground layer G. Therefore, there is a case in which a sufficient anchor function is unable to be exerted against tensile forces from a plurality of directions. On the other hand, in the present invention, the anchor device 20 is unfolded by pulling the tension member 85 at the embedded position of the anchor device 20 in the ground layer G, and a pressure receiving surface of the anchor device 20 extends substantially perpendicular to the extending direction of the tension member 85. As a result, when the tension member 85 is pulled, the anchor device 20 can be installed at any position, even while the pressure receiving surface of the anchor device 20 extends substantially perpendicular to the extending direction of the tension member 85. Therefore, the anchor device 20 of the present invention can exert a high effect on tensile forces from a plurality of directions.

## Claims

1. An anchor device comprising:
a shaft member extending along a central axis and configured to receive attachment of a tension member; and
a first plate member and a second plate member configured to be rotatable relative to each other about the central axis, wherein
the first plate member includes a first back end portion farthest from the central axis in a direction in which the first plate member extends and a direction orthogonal to the central axis,
the second plate member includes a second back end portion farthest from the central axis in a direction in which the second plate member extends and a direction orthogonal to the central axis, and
the anchor device is configured to be able to change from a folded state in which the first back end portion and the second back end portion are close to each other to an unfolded state in which the first back end portion and the second back end portion are far from each other.

2. The anchor device according to claim 1, wherein
the first plate member includes a first outer surface that is oriented away from the second plate member in the folded state,
the second plate member includes a second outer surface that is oriented away from the first plate member in the folded state,
the first outer surface includes a first inclined outer surface that approaches the second plate member as the first inclined outer surface approaches the shaft member in the folded state, and
the second outer surface includes a second inclined outer surface that approaches the first plate member as the second inclined outer surface approaches the shaft member in the folded state.

3. The anchor device according to claim 1, wherein
the first back end portion includes a first inclined end surface that approaches the second plate member as the first inclined end surface approaches the shaft member in the folded state, and
the second back end portion includes a second inclined end surface that approaches the first plate member as the second inclined end surface approaches the shaft member in the folded state.

4. The anchor device according to claim 1, further comprising:
a third plate member connected to the first plate member and configured to be rotatable relative to the first plate member; and
a fourth plate member connected to the second plate member and configured to be rotatable relative to the second plate member.

5. The anchor device according to claim 1, further comprising a restriction portion configured to restrict an angle between the first plate member and the second plate member to a predetermined angle or less, in the unfolded state.

6. The anchor device according to claim 5, wherein the restriction portion includes contact portions that come into contact with each other when the angle between the first plate member and the second plate member becomes the predetermined angle.

7. The anchor device according to claim 5, wherein the restriction portion includes a connection member that connects the first plate member and the second plate member to each other.

8. An anchor device comprising:
a shaft member extending along a central axis and configured to receive attachment of a tension member;
a first frame member and a second frame member configured to be rotatable relative to each other about the central axis; and
a pressure receiving member caused to extend across the first frame member and the second frame member, wherein
the first frame member includes a first back end portion farthest from the central axis in a direction orthogonal to the central axis,
the second frame member includes a second back end portion farthest from the central axis in a direction orthogonal to the central axis, and
the anchor device is configured to be able to change from a folded state in which the first back end portion and the second back end portion are close to each other to an unfolded state in which the first back end portion and the second back end portion are far from each other.

9. The anchor device according to claim 8, further comprising:
a third frame member connected to the first frame member and configured to be rotatable relative to the first frame member; and
a fourth frame member connected to the second frame member and configured to be rotatable relative to the second frame member.

10. The anchor device according to claim 8, further comprising a restriction portion configured to restrict an angle between the first frame member and the second frame member to a predetermined angle or less, in the unfolded state.

11. The anchor device according to claim 10, wherein the restriction portion includes a connection member that connects the first frame member and the second frame member to each other.

12. An anchor system comprising:
the anchor device according to any one of claims 1 to 11; and
a tension member attached to the shaft member.

13. A method of installing an anchor system, the method comprising:
a step of placing the anchor device of the anchor system according to claim 12 into a ground layer in the folded state; and
a step of causing the anchor device to change from the folded state to the unfolded state by pulling the tension member.
